# EUROPEAN PATENT SPECIFICATION

(11) **EP 2 372 965 B1**
(45) Date of publication and mention of the grant of the patent: **27.03.2013**
(21) Application number: 09832870.1
(22) Date of filing: 14.09.2009
(51) Int. Cl.: H04L 29/06, H04W 76/02, H04W 48/18

(54) **SERVICE PROCESSING METHOD, DEVICE AND SYSTEM**
VERFAHREN, VORRICHTUNG UND SYSTEM ZUR DIENSTVERARBEITUNG
PROCÉDÉ, DISPOSITIF ET SYSTÈME DE TRAITEMENT DE SERVICE

(30) Priority: 16.12.2008 CN 200810239768
(43) Date of publication of application: 05.10.2011
(73) Proprietor: Huawei Technologies Co., Ltd., Shenzhen, Guangdong 518129 (CN)
(72) Inventor: LUO, Donglei, Shenzhen Guangdong 518129 (CN); LIU, Meisheng, Shenzhen Guangdong 518129 (CN)
(74) Representative: Isarpatent
(86) International application number: PCT/CN2009/073913
(87) International publication number: WO 2010/069188

(56) References cited:
- CN-A- 1 430 355
- CN-A- 1 505 876
- CN-A- 1 567 896
- CN-A- 101 252 782
- "3rd Generation Partnership Project; Technical Specification Group Services and System Aspects; General Packet Radio Service (GPRS) enhancements for Evolved Universal Terrestrial Radio Access Network (E-UTRAN) access (Release 8); EXCERPT, ps. 1-4, 36-72, 192-194", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.3.0, 1 September 2008 (2008-09-01), pages 1-204, XP002666527,
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 8); EXCERPT: ps. 1-4, 36-37, 44-45, 81-99, 107-108", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.6.0, 1 September 2008 (2008-09-01), XP002666544,
- "3rd Generation Partnership Project; Technical Specification Group Radio Access Network; Evolved Universal Terrestrial Radio Access Network (E- UTRAN); S1 Application Protocol (S1AP) (Release 8); EXCERPT ps. 1-4, 19-21, 42-44, 53-57, 69-73, 98-100", 3GPP STANDARD; 3GPP TS 36.413, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.3.0, 1 September 2008 (2008-09-01), XP002666545,

## Description

The present invention relates to communication technologies, and in particular, to a method, device and system for service processing and a method, device and system for signaling message transmission.

### BACKGROUND OF THE INVENTION

The system architecture evolution (SAE) network, a next generation core network proposed by the 3rd Generation Partnership Project (3GPP), will be a unified network that provides packet services. The SAE network is designed with a flat architecture including two layers of nodes, where the evolved NodeB (eNodeB) is directly connected to the SAE packet core network, thus reducing the network delay and simplifying the network deployment. Furthermore, the control function is separated from the bearing function. The control function in the packet core network is separately defined in a mobility management entity (MME). The bearing function entities such as the serving gateway (S-GW) and the packet data network gateway (P-GW) may be set separately or integrated. The network between the eNodeB and the core network device MME/S-GW is called a backhaul network.

The user equipment (UE) attach procedure and the tracking area update (TAU) procedure are generally as follows: The MME receives a UE Attach message or a TAU message, and then sends a Create Default Bearer Request message or a Create Bearer Request message; the S-GW sends a message that includes the Create Default Bearer Request or the Create Bearer Request to the P-GW; after receiving the message, the P-GW returns a Create Default Bearer Response message or a Create Bearer Response message to the S-GW; the S-GW sends the Create Default Bearer Response message or the Create Bearer Response message to the MME; the MME sends an Attach Accept message to the eNodeB. The preceding requests, responses, and Attach Accept messages include a local S1-U IP address of the S-GW. Services are transmitted on the backhaul network between the eNodeB and the S-GW by exchanging IP addresses. In addition, the eNodeBs are differentiated according to the IP address of the eNodeB in the process of transmitting signaling messages between the eNodeBs.

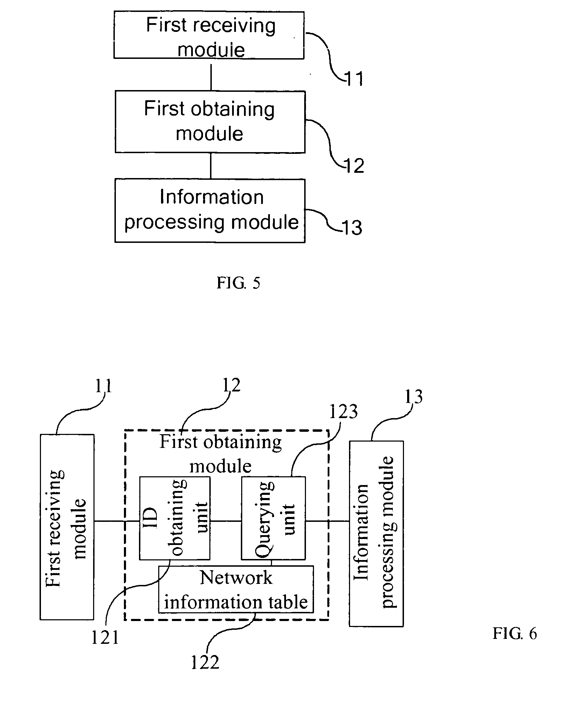

A network attach procedure is specifically disclosed in "3rd Generation Partnership Project; technique Specification Group Services and System Aspects; General Packet Radio Service(GPRS) enhancements for Evolved Universal Terrestrial Radio Access Network (E-UTRAN) access (Release 8); 3GPP TS 23.401" (see pages 51 to 55 and Figure 5.3.2.1-1).

The prior art has the following disadvantage: The MME and the S-GW are directly connected to the eNodeB. A large number of eNodeBs may be connected to the same MME and the S-GW, and the eNodeBs may be widely distributed. However, the backhaul networks connected to different eNodeBs may not be interconnected. To save the IP address of the eNodeB, the IP address of the eNodeB on networks that are not directly interconnected may be reused in the process of deploying the eNodeBs. In this way, when the eNodeB is expanded or the eNodeB operators are merged, the IP address of the eNodeB may not be changed, which avoids interrupting original services and makes the backhaul network plan and adjustment more convenient. In the preceding technical solution, the network deployment information of the eNodeB is unavailable in the Create Default Bearer Request message or the Create Bearer Request message, so that the reuse of IP address of the eNodeB may not be supported.

### SUMMARY OF THE INVENTION

Embodiments of the present invention provide a method, device and system for service processing and a method, device and system for signaling message transmission to support the reuse of IP address of the eNodeB.

An embodiment of the present invention provides a method for service processing, including:
receiving a Bearer Request message from an MME, where the Bearer Request message includes a backhaul network identifier (ID);
obtaining the corresponding backhaul network information and local information according to the backhaul network ID, and sending the Bearer Request message to a P-GW; and
after receiving a Bearer Response message, sending the Bearer Response message including the local information, which is the local address information. The backhaul network ID is at least one of an eNodeB ID and a tracking area identifier (TAI) and the backhaul network information is the backhaul network ID.

An embodiment of the present invention further provides a device for service processing, including:
a first receiving module, configured to receive a Bearer Request message from an MME, where the Bearer Request message includes a backhaul network ID;
a first obtaining module, configured to obtain the corresponding backhaul network information and local information according to the backhaul network ID, and send the Bearer Request message to a P-GW; and
an information processing module, configured to send the Bearer Response message including the local information after receiving a Bearer Response message. The local information is the local address information. The backhaul network ID is at least one of an eNodeB ID and a tracking area identifier (TAI) and the backhaul network information is the backhaul network ID.

An embodiment of the present invention further provides a system for service processing, including an eNodeB on a communication network, an MME, an S-GW, and a P-GW. The MME is configured to send a Bearer Request message that includes a backhaul network ID to the S-GW after receiving an Attach Request message or a TAU message from the eNodeB.

The S-GW is configured to: receive the Bearer Request message from the MME; obtain the corresponding backhaul network information and local information according to the backhaul network ID, and send the Bearer Request message to the P-GW; and after receiving a Bearer Response message, send the Bearer Response message including the local information.. The local information is the local address information. The backhaul network ID is at least one of an eNodeB ID and a tracking area identifier (TAI) and the backhaul network information is the backhaul network ID.

By using the method, device and system for service processing according to embodiments of the present invention, a backhaul network ID is added to the Bearer Request message received by the S-GW, and the backhaul network information can be obtained according to the backhaul network ID. In this way, the eNodeB and the S-GW can establish a service bearer on the same backhaul network when the IP address of the eNodeB is reused. By using the method, device and system for signaling message transmission according to embodiments of the present invention, the address of a destination eNodeB is added to the signaling message sent between the eNodeBs. In this way, the signaling message may still be sent to the address of the destination eNodeB when the IP address of the eNodeB is reused. The method, device and system for service processing and the method, device and system for signaling message transmission according to embodiments of the present invention can all support the reuse of IP address of eNodeB.

### BRIEF DESCRIPTION OF THE DRAWINGS

FIG. 1 is a schematic flowchart showing a method for service processing according to a first embodiment of the present invention;
FIG. 2 is a schematic flowchart of a first embodiment of the present invention;
FIG. 3 is a schematic flowchart of a second embodiment of the present invention;
FIG. 4 is a schematic flowchart showing a method for signaling message transmission;
FIG. 5 is a schematic diagram showing a structure of a service processing device according to a first embodiment of the present invention;
FIG. 6 is a schematic diagram showing a structure of a service processing device according to a second embodiment of the present invention;
FIG. 7 is a schematic diagram showing a structure of a signaling message transmission device; and
FIG. 8 is a schematic diagram showing a structure of a service processing system.

### DETAILED DESCRIPTION OF THE EMBODIMENTS

The present invention is further described in detail with reference to the accompanying drawings and embodiments.

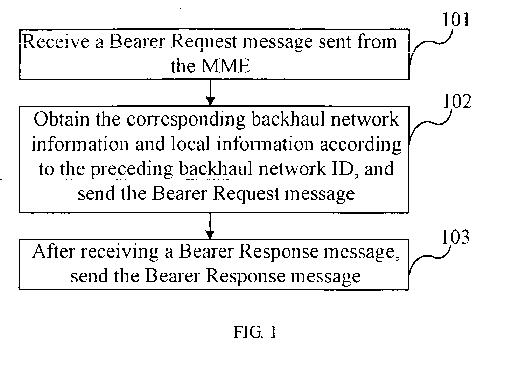

Embodiments of the present invention provide a method for service processing to ensure that the eNodeB and the S-GW can establish service bearers on the same backhaul network. FIG. 1 is a schematic flowchart showing a method for service processing according to a first embodiment of the present invention. As shown in FIG. 1, the method includes the following steps:
Step 101: The S-GW receives a Bearer Request message from the MME, where the Bearer Request message includes a backhaul network ID. The Bearer Request message may be a Create Default Bearer Request message or a Create Bearer Request message used in different cases. In one case, when the UE sends an Attach Request message, the eNodeB sends the Attach Request message to the MME; after receiving the Attach Request message, the MME generates a Create Default Bearer Request message that includes a backhaul network ID and sends the Create Default Bearer Request message to the S-GW; the S-GW receive the Create Default Bearer Request message. In another case, when the UE sends a TAU Request message, the eNodeB sends the TAU Request message; the MME that receives the TAU Request message generates a Create Bearer Request message, and sends the Create Bearer Request message to the S-GW; the S-GW receives the Create Bearer Request message that includes the backhaul network ID.
Step 102: The S-GW obtains the corresponding backhaul network information and local information according to the backhaul network ID, and sends a Bearer Request message. This step may be as follows: A mapping among the backhaul network ID, backhaul network information, and local information is established on the S-GW, and then the S-GW obtains the corresponding backhaul network information and local information according to the backhaul network ID that indicates through which backhaul network the S-GW is connected to the eNodeB. The local information may be the local address information, for example, the IP address of the S-GW.
Step 103: After receiving a Bearer Response message, the S-GW adds the local information to the Bearer Response message, and sends the Bearer Response message including the local information. Specifically, after the S-GW sends a Bearer Request message to the P-GW, the P-GW returns a Bearer Response message; after receiving the Bearer Response message, the S-GW adds the local information to the Bearer Response message, and sends the Bearer Response message including the local information to the MME.

According to the method for service processing in this embodiment, the Bearer Request message that the S-GW receives from the MME includes a backhaul network ID; by using the backhaul network ID, the corresponding backhaul network and local information may be obtained. Therefore, by using the method for service processing in this embodiment, in the case of network isolation, it can be ensured that the S-GW and the eNodeB can establish a service bearer on the same backhaul network even if the IP address of the eNodeB is reused. The method for service processing in this embodiment supports the reuse of IP address of the eNodeB.

After receiving a Bearer Response message, the MME may send the Bearer Response message to the eNodeB; the eNodeB obtains the preceding local information, that is, the port information (IP address) of the S-GW, from the Bearer Response message. In the preceding embodiment, the backhaul network ID may be at least one of the following: the eNodeB ID, the tracking area identifier (TAI), and the virtual private network (VPN) ID. A network information table, which stores the mapping among the backhaul network information, the local information and at least one of the following: the eNodeB ID, the TAI and the VPN ID, may be pre-stored on the S-GW; after receiving the Bearer Request message, the S-GW obtains the eNodeB ID, the TAI or the VPN ID, and then queries the network information table for the corresponding backhaul network information and local information. The backhaul network information hereinafter may be a backhaul network ID.

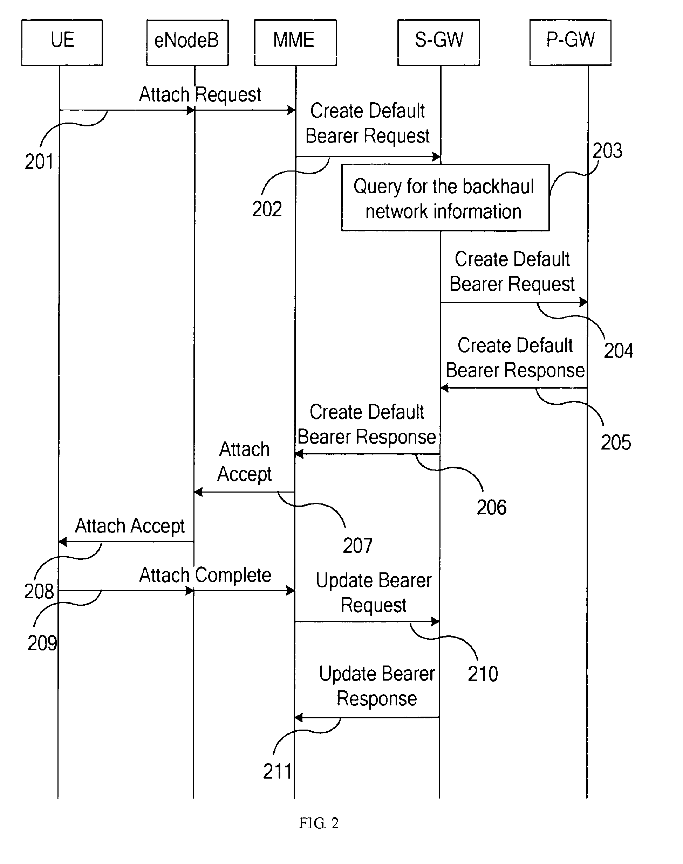

The scenario where the eNodeB and the S-GW establish a service bearer on the same backhaul network by using the eNodeB ID may involve two cases: The UE sends an Attach Request message; the UE sends a TAU Request message. FIG. 2 is a schematic flowchart of the first embodiment of the present invention. As shown in FIG. 2, the method includes the following steps:
Step 201: The UE sends an Attach Request message. The Attach Request message is then sent to the MME by an eNodeB. Each eNodeB is allocated with an eNodeB ID.
Step 202: After receiving the Attach Request message, the MME judges which eNodeB sends the Attach Request message, that is, it determines the eNodeB ID, generates a Create Default Bearer Request message, and sends the Create Default Bearer Request message to the S-GW, where the eNodeB ID is added to the Create Default Bearer Request message.
Step 203: After receiving the Create Default Bearer Request message, the S-GW obtains the eNodeB ID, and queries the pre-stored mapping between the eNodeB ID and the backhaul network information for the correct backhaul network information and the corresponding local S1-U IP address (that is, the local information), where the backhaul network information may be the backhaul network ID. In this case, it can be ensured that the eNodeB and the S-GW can establish a service bearer on the same backhaul network.
Step 204: The S-GW sends a Create Default Bearer Request message to the P-GW.
Step 205: The P-GW returns a Create Default Bearer Response message to the S-GW.
Step 206: The S-GW returns a Create Default Bearer Response message including the preceding S1-U IP address to the MME.
Step 207: The MME sends an Attach Accept message including the preceding S1-U IP address to the eNodeB.
Step 208: After receiving the Attach Accept message, the eNodeB obtains the S1-U IP address, and then sends an Attach Accept message to the UE.
Step 209: After receiving the Attach Accept message, the UE sends an Attach Complete message to the eNodeB, and then the eNodeB sends the Attach Complete message to the MME.
Step 210: The MME sends an Update Bearer Request message to the S-GW.
Step 211: The S-GW returns an Update Bearer Response message to the MME.

In this embodiment, when the UE sends an Attach Request message, the MME generates a Create Default Bearer Request message that includes the eNodeB ID after receiving the Attach Request message; after receiving the Create Default Bearer Request message, the S-GW obtains the eNodeB ID, and queries the pre-stored network information table for the correct backhaul network and the corresponding local S1-U IP address. In this way, it can be ensured that the eNodeB and the S-GW can establish a service bearer on the same backhaul network even in the case that the IP address of the eNodeB is reused in isolated networks.

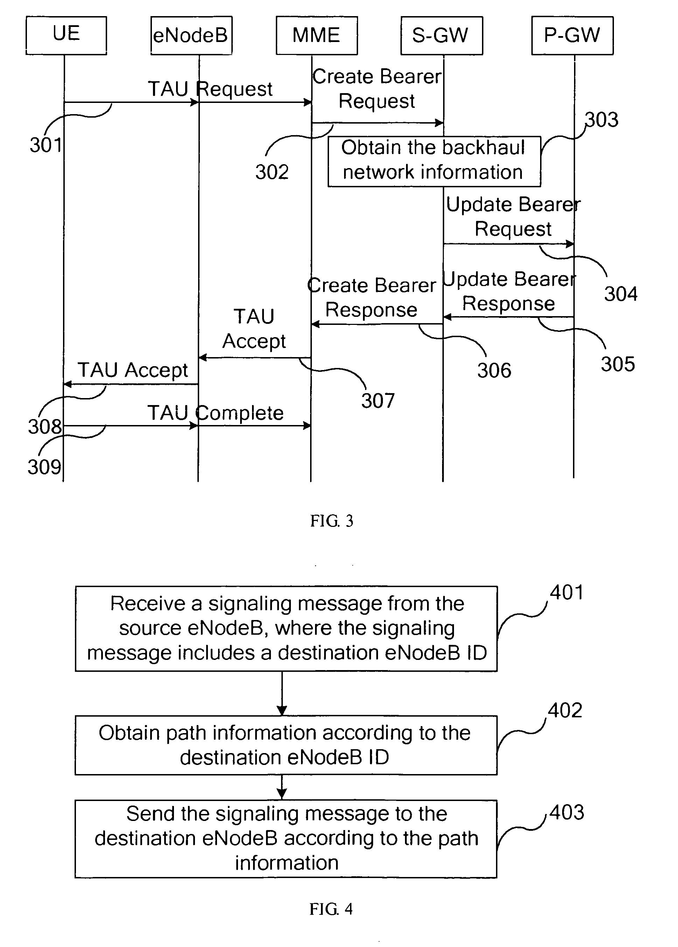

For the case that the UE initiates a TAU Request message, FIG.3 is a schematic flowchart showing the second embodiment of the present invention. As shown in FIG. 3, the method includes the following steps:
Step 301: The UE sends a TAU Request message to the eNodeB, and then the eNodeB sends the TAU Request message to the MME.
Step 302: After receiving the TAU Request message, the MME obtains the eNodeB ID according to the connection relationship with the eNodeB, generates a Create Bearer Request message that includes the eNodeB ID, and sends the Create Bearer Request message including the eNodeB ID to the S-GW.
Step 303: After receiving the Create Bearer Request message, the S-GW obtains the eNodeB ID, and obtains the correct backhaul network information and the local S1-U IP address according to the pre-stored network information table of the mapping among the eNodeB ID, the backhaul network, and the local S1-U IP address, where the backhaul network information may be the backhaul network ID. In this way, it can be ensured that the eNodeB and the S-GW can establish a service bearer on the same backhaul network.
Step 304: The S-GW sends an Update Bearer Request message to the P-GW.
Step 305: The P-GW returns an Update Bearer Response message to the S-GW.
Step 306: After receiving the Update Bearer Response message, the S-GW generates a Create Bearer Response message, and sends the Create Bearer Response message to the MME, where the Create Bearer Response message includes the S1-U IP address of the S-GW.
Step 307: After receiving the Create Bearer Response message, the MME generates a TAU Accept message, and sends the TAU Accept message to the eNodeB, where the TAU Accept message includes the preceding S1-U IP address of the S-GW
Step 308: The eNodeB obtains the S1-U IP address of the S-GW from the TAU Accept message, and sends the TAU Accept message to the UE.
Step 309: The UE sends a TAU Complete message to the eNodeB, and the eNodeB sends the TAU Complete message to the MME.

In this embodiment, through the preceding steps, it can be ensured that the eNodeB and the S-GW can establish a service bearer on the same backhaul network. After the service bearer is established, the service data may be transmitted between the eNodeB and the S-GW.

In the preceding embodiment of the present invention, the eNodeB ID is added to the Create Default Bearer Request message or the Create Bearer Request message received by the S-GW. In this way, the correct backhaul network can be obtained when the IP address of the eNodeB is reused; the S-GW and the eNodeB can establish a service bearer on the same backhaul network. In addition, a TAI or a VPN ID may be added to the Create Default Bearer Request message or the Create Bearer Request message.

After the TAI is added, backhaul networks may be differentiated by using the TAI in the case that all the eNodeBs in the tracking area (TA) belong to the same backhaul network. Therefore, in the preceding two embodiments of the present invention, the mapping among the TAI, the backhaul network information, and the local S1-U IP address may be configured on the S-GW. When the TAI is added to the Create Default Bearer Request message or the Create Bearer Request message, the S-GW can obtain the correct backhaul network information and the corresponding local S1-U IP address according to the TAI. In this way, it can be ensured that the S-GW and the eNodeB can establish a service bearer on the same backhaul network.

In addition, when the backhaul network is divided into different VPNs, a VPN ID may be added to the Create Default Bearer Request message or the Create Bearer Request message; the mapping among the VPN ID, the backhaul network information, and the local S1-U IP address is stored on the S-GW, so that the S-GW can obtain the correct backhaul network information and the corresponding local S1-U IP address according to the VPN ID. In this way, it can be ensured that the S-GW and the eNodeB can establish a service bearer on the same backhaul network.

FIG. 4 is a schematic flowchart showing a method for signaling message transmission. As shown in FIG. 4, the method includes the following steps:
Step 401: The MME receives a signaling message from the source eNodeB, where the signaling message includes a destination eNodeB ID. This step is used for communications between multiple eNodeBs that cannot find each other by IP addressing. Each eNodeB is allocated with an ID. When the eNodeBs send signaling messages to each other, a destination eNodeB ID is added to the signaling messages.
Step 402: The MME obtains path information according to the preceding destination eNodeB ID. In this step, the path information may be a Stream Control Transmission Protocol (SCTP) association established between the eNodeB and the MME.
Step 403: The MME sends the signaling message to the destination eNodeB according to the path information.

In this example, when a signaling message is sent between eNodeBs on different backhaul networks, a destination eNodeB ID is added to the signaling message; after receiving the signaling message, the MME obtains the SCTP association according to the destination eNodeB ID; the MME sends the signaling message to the destination eNodeB. In this way, the IP addresses of eNodeBs on different backhaul networks may be reused in the case of network isolation, and signaling messages may be transmitted successfully. On the basis of the preceding example, a pre-generated link information table that stores the mapping among the eNodeB ID, the backhaul network, and the SCTP association ID may be configured inside the MME, where the SCTP association between the eNodeB and the MME is established according to RFC 2960; after receiving a signaling message, the MME obtains the destination eNodeB ID from the signaling message, queries the link information table for the SCTP association according to the destination eNodeB ID, and sends the signaling message to the destination eNodeB. In this example, a link information table is set, so that the MME can easily query for the SCTP association, and then send a signaling message.

FIG. 5 is a schematic diagram showing a structure of a service processing device according to a first embodiment of the present invention. As shown in FIG. 5, the device includes a first receiving module 11, a first obtaining module 12, and an information processing module 13. The first receiving module 11 is configured to receive a Bearer Request message from the MME, where the Bearer Request message includes a backhaul network ID. The first obtaining module 12 is configured to obtain the corresponding backhaul network information and local information according to the backhaul network ID, and send a Bearer Request message. The information processing module 13 is configured to send the Bearer Response message after receiving a Bearer Response message, where the local information is added to the Bearer Response message.

The service processing device provided in this embodiment may be equivalent to the S-GW in a communication system. After receiving a Create Default Bearer Request message or a Create Bearer Request message, the service processing device obtains a backhaul network ID from the Create Default Bearer Request message or the Create Bearer Request message, and obtains the corresponding backhaul network information and local information according to the backhaul network ID. In this way, it can be ensured that the eNodeB and the S-GW can establish a service bearer on the same backhaul network when IP address of the eNodeB is reused.

In the preceding embodiment, the backhaul network ID may be an eNodeB ID, a TAI or a VPN ID. FIG. 6 is a schematic diagram showing a structure of a service processing device according to a second embodiment of the present invention. As shown in FIG. 6, the device includes a first receiving module 11, a first obtaining module 12, and an information processing module 13. The first receiving module 11 is configured to receive a Bearer Request message from the MME, where the Bearer Request message includes a backhaul network ID. The first obtaining module 12 may include an ID obtaining unit 121, a network information table 122, and a querying unit 123. The ID obtaining unit 121 is configured to obtain from the Bearer Request message at least one of the following: the eNodeB ID, the TAI and the VPN ID. The querying unit 123 is configured to query the network information table 122 for the corresponding backhaul network information and local information according to at least one of the following: the eNodeB ID, the TAI, and the VPN ID that are obtained by the obtaining unit. The network information table 122 is configured to store the mapping among the backhaul network information, the local information, and at least one of the following: the eNodeB ID, the TAI and the VPN ID. The information processing module 13 is configured to send the Bearer Response message including the local information after receiving a Bearer Response message. In this embodiment, an eNodeB ID, a TAI, or a VPN ID may be used as the backhaul network ID. In this way, it can be ensured that the eNodeB and the S-GW can establish a service bearer on the same backhaul network when the IP addresses of the eNodeBs on different backhaul networks are reused. In addition, in this embodiment, a network information table is established on the S-GW, so that the correct backhaul network information can be queried for and found in the network information table according to an eNodeB ID, a TAI, or a VPN ID.

The device for service processing provided in this embodiment can carry out the steps of the method for service processing according to the preceding embodiments of the present invention.

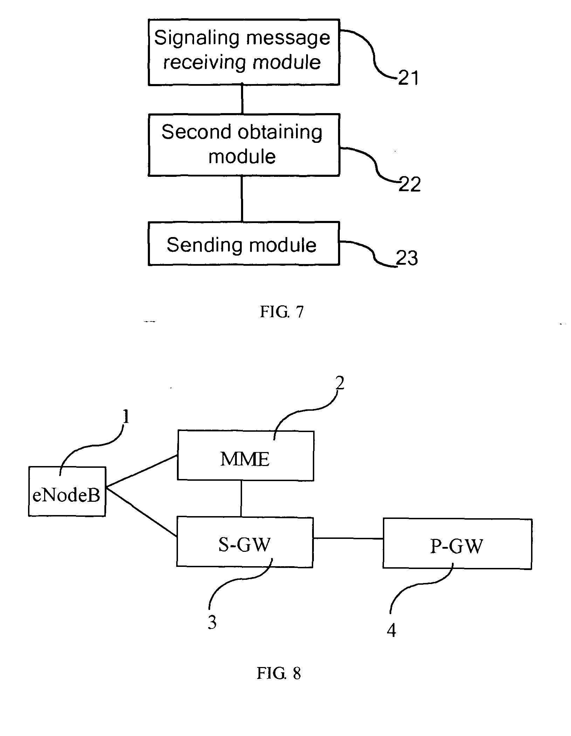

FIG. 7 is a schematic diagram showing a structure of a signaling message transmission device. As shown in FIG. 7, the device includes a signaling message receiving module 21, a second obtaining module 22, and a sending module 23. The signaling message receiving module 21 is configured to receive a signaling message from the source eNodeB, where the signaling message includes a destination eNodeB ID. The second obtaining module 22 is configured to obtain path information according to the preceding destination eNodeB ID. The sending module 23 is configured to send the signaling message to the destination eNodeB according to the path information.
In this example, a destination eNodeB ID is added to the signaling messages sent between eNodeBs that cannot find each other by IP addressing, so that the signaling messages can be sent to the destination eNodeB accurately. The path information in this example may be an SCTP association.
In addition, on the basis of the preceding example, the second obtaining module may further include a link information table and a second obtaining unit. The link information table is configured to store the mapping among the eNodeB ID, the backhaul network information, and the SCTP association ID. The second obtaining unit is configured to obtain the SCTP association from the link information table according to the destination eNodeB ID.
The device for signaling message transmission provided in this example can carry out the steps of the method for signaling message transmission according to the preceding examples.
FIG. 8 is a schematic diagram showing a structure of a service processing system. As shown in FIG. 8, the system includes an eNodeB 1, an MME 2, an S-GW 3, and a P-GW 4. The MME 2 is configured to send a Bearer Request message that includes a backhaul network ID to the S-GW after receiving an Attach Request message or a TAU message from the eNodeB 1. The S-GW 3 is configured to: receive the Bearer Request message sent from the MME 2, select the corresponding backhaul network information and local information according to the backhaul network ID, and send the Bearer Response message including the local information after receiving a Bearer Response message from the P-GW 4. By using the service processing system in this embodiment, the backhaul network attribute information is added to a Bearer Request message (for example, a Create Default Bearer Request message or a Create Bearer Request message); the S-GW obtains the backhaul network information and the local information according to the preceding backhaul network ID. In this way, it can be ensured that the eNodeB and the S-GW can establish a service bearer on the same backhaul network when the IP address of the eNodeB is reused.
In the preceding example, the backhaul network ID may include an eNodeB ID, a TAI or a VPN ID.
A preset network information table, which stores the mapping among the backhaul network information, the local information and at least one of the following: the eNodeB ID, the TAI and the VPN ID, may be configured on the S-GW; the S-GW queries the preset network information table for the corresponding backhaul network information and local information according to the eNodeB ID, the TAI or the VPN ID. Setting the network information table can make the query on the backhaul network more convenient. The system for service processing provided in this example can carry out the steps of the method for service processing according to the preceding examples.
An embodiment of the present invention provides a system for signaling message transmission. The system includes an MME and more than two eNodeBs that cannot find each other by IP addressing. The MME is configured to: receive a signaling message from an eNodeB, where the signaling message includes a destination eNodeB ID; obtain path information according to the destination eNodeB ID; and send the signaling message to the destination eNodeB according to the path information. The path information in this embodiment may be an SCTP association. In this embodiment, a destination eNodeB ID is added to the signaling message sent between eNodeBs. In this way, it can be ensured that the MME can send a signaling message to the destination eNodeB accurately when the IP address of the eNodeB is reused. The system for signaling message transmission provided in this embodiment can carry out the steps of the method for signaling message transmission according to the preceding embodiments of the present invention.

By using the method, device and system for service processing provided in embodiments of the present invention, a backhaul network ID is added to the Bearer Request message received by the S-GW. In this way, the eNodeB and the S-GW can establish a service bearer on the same backhaul network when the IP address of the eNodeB is reused. By using the method, device and system for signaling message transmission provided in embodiments of the present invention, a destination eNodeB address is added to the signaling message sent between the eNodeBs. In this way, it can be ensured that the signaling message can be sent to the destination eNodeB address when the IP address of the eNodeB is reused. The method, device and system for service processing and the method, device and system for signaling message transmission provided in embodiments of the present invention can all support the reuse of IP address of eNodeB.

It should be understood by those skilled in the art that the accompanying drawings are merely schematic diagrams of some exemplary embodiments, and those modules or processes in the accompanying drawings are not mandatory in implementing the present invention.

In addition, the modules in the device provided in the embodiments of the present invention may be distributed in the way described herein, or distributed in other ways, for example, in one or more devices provided in different embodiments. The modules provided in the preceding embodiments may be combined into one, or split into several submodules.

The sequence number of each embodiment given above is only for clear description, and does not represent the order of preference.

The solution described in the claims also falls within the protection scope of the present invention.

Persons having ordinary skill in the art may understand that all or part of the steps of the method provided in the embodiments of the present invention may be carried out by a program instructing the relevant hardware. The program may be stored in a computer readable storage medium.

Although the present invention has been described through some exemplary embodiments, the invention is not limited to such embodiments. It is apparent that those skilled in the art can make various modifications or equivalent replacements to the invention.

## Claims

1. A method for service processing, comprising:
Receiving (101) a Bearer Request message from a mobility management entity (MME) (2), wherein the Bearer Request message comprises a backhaul network identifier, ID;
Obtaining (102) corresponding backhaul network information and local information according to the backhaul network ID, and sending the Bearer Request message to a packet data network gateway, P-GW, (4); and
after receiving a Bearer Response message, sending (103) the Bearer Response message comprising the local information,
wherein the local information is a local address information,
**characterized in that**
the backhaul network ID is at least one of an evolved NodeB, eNodeB, ID and a tracking area identifier, TAI, and the backhaul network information is the backhaul network ID.

2. The method of claim 1, wherein after sending the Bearer Response message, the method further comprises:
receiving, by the MME (2), the Bearer Response message, and sending the Bearer Response message comprising the local information to an evolved NodeB, eNodeB, (1).

3. The method of claim 2, wherein the step of receiving the Bearer Request message from the MME (2) comprises:
receiving a Create Default Bearer Request message from the MME (2), wherein the Create Default Bearer Request message is sent by the MME (2) after the MME (2) receives an Attach Request message; and
the Bearer Response massage that the MME (2) sends to the eNodeB is an Attach Accept message.

4. The method of claim 2, wherein the step of receiving the Bearer Request message from the MME (2) comprises:
receiving a Create Bearer Request message from the MME (2), wherein the Create Bearer Request message is sent by the MME (2) after the MME (2) receives a tracking area update, TAU, Request message; and
the Bearer Response message that the MME (2) sends to the eNodeB (1) is a TAU Accept message.

5. The method of any one of claims 1 to 4, wherein the backhaul network ID also comprises a virtual private network, VPN, ID.

6. The method of claim 5, wherein the step of obtaining the corresponding backhaul network information and local information according to the backhaul network ID comprises:
obtaining at least one of the following: the eNodeB ID, the TAI, and the VPN ID; and
querying a network information table, which stores a mapping among the backhaul network information, the local information and at least one of the following: the eNodeB ID, the TAI and the VPN ID, for the corresponding backhaul network information and local information.

7. A device for service processing, comprising:
a first receiving module (11), configured to receive (101) a Bearer Request message from a mobility management entity (MME) (2), wherein the Bearer Request message comprises a backhaul network identifier (ID);
a first obtaining module (12), configured to obtain (102) the corresponding backhaul network information and local information according to the backhaul network ID, and send the Bearer Request message to a packet data network gateway (P-GW); and
an information processing module (13), configured to send (103) the Bearer Response message comprising the local information after receiving a Bearer Response message
wherein the local information is a local address information,
**characterized in that**
the backhaul network ID is at least one of an eNodeB ID and a tracking area identifier (TAI) and the backhaul network information is the backhaul network ID.

8. The device of claim 7, wherein the backhaul network ID also comprises a virtual private network (VPN) ID.

9. The device of claim 8, wherein the first obtaining module comprises:
a first obtaining unit (121), configured to obtain from the Bearer Request message at least one of the following: the eNodeB ID, the TAI, and the VPN ID;
a network information table (122), configured to store a mapping among the backhaul network information, the local information and at least one of the following: the eNodeB ID, the TAI and the VPN ID; and
a querying unit (123), configured to query the network information table (122) for the corresponding backhaul network information and local information according to the eNodeB ID, the TAI or the VPN ID that are obtained by the obtaining unit (121).

10. A system for service processing, comprising an evolved NodeB, eNodeB, (1) on a communication network, a mobility management entity, MME, (2), a serving gateway, S-GW, (3), and a packet data network gateway, P-GW, (4), wherein:
the MME (2) is configured to send a Bearer Request message that comprises a backhaul network identifier, ID, to the S-GW (3) after receiving an Attach Request message or a tracking area update, TAU, message from the eNodeB (1); and:
the S-GW (3) is configured to: receive the Bearer Request message from the MME (2); obtain corresponding backhaul network information and local information according to the backhaul network ID, and send the Bearer Request message to the P-GW (4); and after receiving a Bearer Response message, send the Bearer Response message comprising the local information,
wherein the local information is a local address information,
**characterized in that**
the backhaul network ID is at least one of an eNodeB ID and a tracking area identifier (TAI) and the backhaul network information is the backhaul network ID.

## Patentansprüche

1. Verfahren zur Dienstverarbeitung, umfassend:
Empfangen (101) einer Trägeranforderungsnachricht von einer Mobility Management Entity (MME) (2), wobei die Trägeranforderungsnachricht eine Backhaul-Netz-Kennung bzw. -ID umfasst;
Erhalten (102) von entsprechenden Backhaul-Netzinformationen und lokalen Informationen gemäß der Backhaul-Netz-ID und Senden der Trägeranforderungsnachricht zu einem Paketdaten-Netz-Gateway, P-GW, (4); und
nach dem Empfang einer Trägerantwortnachricht Senden (103) der Trägerantwortnachricht, die die lokalen Informationen umfasst,
wobei die lokalen Informationen eine lokale Adressinformation sind,
**dadurch gekennzeichnet, dass**
die Backhaul-Netz-ID eine ID eines evolved NodeB bzw. eNodeB und/oder ein Tracking Area Identifier, TAI, ist und die Backhaul-Netzinformationen die Backhaul-Netz-ID sind.

2. Verfahren nach Anspruch 1, wobei das Verfahren nach dem Senden der Trägerantwortnachricht ferner Folgendes umfasst:
Empfangen der Trägerantwortnachricht durch die MME (2) und Senden der Trägerantwortnachricht, die die lokalen Informationen umfasst, zu einem evolved NodeB, eNodeB, (1).

3. Verfahren nach Anspruch 2, wobei der Schritt des Empfangens der Trägeranforderungsnachricht von der MME (2) Folgendes umfasst:
Empfangen einer Vorgabeträger-Erzeugungsanforderungsnachricht von der MME (2), wobei die Vorgabeträger-Erzeugungsanforderungsnachricht durch die MME (2) gesendet wird, nachdem die MME (2) eine Nachricht Attach Request empfängt; und
die Trägerantwortnachricht, die die MME (2) zu dem eNodeB sendet, eine Nachricht Attach Accept ist.

4. Verfahren nach Anspruch 2, wobei der Schritt des Empfangens der Trägeranforderungsnachricht von der MME (2) Folgendes umfasst:
Empfangen einer Trägererzeugungsanforderungsnachricht von der MME (2), wobei die Trägererzeugungsanforderungsnachricht durch die MME (2) gesendet wird, nachdem die MME (2) eine Nachricht Tracking Area Update bzw. TAU Request empfängt; und
die Trägerantwortnachricht, die die MME (2) zu dem eNodeB (1) sendet, eine Nachricht TAU Accept ist.

5. Verfahren nach einem der Ansprüche 1 bis 4, wobei die Backhaul-Netz-ID außerdem eine ID des Virtual Private Network, VPN, umfasst.

6. Verfahren nach Anspruch 5, wobei der Schritt des Erhaltens der entsprechenden Backhaul-Netzinformationen und lokalen Informationen gemäß der Backhaul-Netz-ID Folgendes umfasst:
Erhalten von mindestens einer der folgenden Alternativen: der eNodeB-ID, des TAI und der VPN-ID; und
Abfragen einer Netzinformationstabelle, die eine Abbildung zwischen den Backhaul-Netzinformationen, den lokalen Informationen und mindestens einer der Alternativen eNodeB-ID, TAI und VPN-ID für die entsprechenden Backhaul-Netzinformationen und lokalen Informationen speichert.

7. Einrichtung zur Dienstverarbeitung, umfassend:
ein erstes Empfangsmodul (11), das dafür ausgelegt ist, eine Trägeranforderungsnachricht von einer Mobility Management Entity (MME) (2) zu empfangen (101), wobei die Trägeranforderungsnachricht eine Backhaul-Netz-Kennung (ID) umfasst;
ein erstes Erhaltemodul (12), das dafür ausgelegt ist, die entsprechenden Backhaul-Netzinformationen und lokalen Informationen gemäß der Backhaul-Netz-ID zu erhalten (102) und die Trägeranforderungsnachricht zu einem Paketdaten-Netz-Gateway (P-GW) zu senden; und
ein Informationsverarbeitungsmodul (13), das dafür ausgelegt ist, die Trägerantwortnachricht, die die lokalen Informationen umfasst, nach dem Empfang einer Trägerantwortnachricht zu senden (103),
wobei die lokalen Informationen eine lokale Adressinformation sind,
**dadurch gekennzeichnet, dass**
die Backhaul-Netz-ID eine eNodeB-ID und/oder ein Tracking Area Identifier (TAI) ist und die Backhaul-Netzinformationen die Backhaul-Netz-ID sind.

8. Einrichtung nach Anspruch 7, wobei die Backhaul-Netz-ID außerdem eine ID des Virtual Private Network (VPN) umfasst.

9. Einrichtung nach Anspruch 8, wobei das erste Erhaltemodul Folgendes umfasst:
eine erste Erhalteeinheit (121), die dafür ausgelegt ist, aus der Trägeranforderungsnachricht mindestens eine der folgenden Alternativen zu erhalten:
die eNodeB-ID, den TAI und die VPN-ID;
eine Netzinformationstabelle (122), die dafür ausgelegt ist, eine Abbildung zwischen den Backhaul-Netzinformationen, den lokalen Informationen und mindestens einer der Alternativen eNodeB-ID, TAI und VPN-ID zu speichern; und
eine Abfrageeinheit (123), die dafür ausgelegt ist, die Netzinformationstabelle (122) gemäß der eNodeB-ID, dem TAI oder der VPN-ID, die durch die Erhalteeinheit (121) erhalten werden, nach den entsprechenden Backhaul-Netzinformationen und lokalen Informationen abzufragen.

10. System zur Dienstverarbeitung, das einen evolved NodeB bzw. eNodeB (1) in einem Kommunikationsnetz, eine Mobility Management Entity, MME, (2), ein versorgendes Gateway, S-GW, (3) und ein Paketdaten-Netz-Gateway, P-GW, (4) umfasst, wobei:
die MME (2) dafür ausgelegt ist, eine Trägeranforderungsnachricht zu dem S-GW (3) zu senden, die eine Backhaul-Netz-Kennung bzw. -ID umfasst, nachdem eine Nachricht Attach Request oder eine Nachricht der Tracking Area Update, TAU, von dem eNodeB (1) empfangen wird; und
das S-GW (3) für Folgendes ausgelegt ist: Empfangen der Trägeranforderungsnachricht von der MME (2); Erhalten von entsprechenden Backhaul-Netzinformationen und lokalen Informationen gemäß der Backhaul-Netz-ID und Senden der Trägeranforderungsnachricht zu dem P-GW (4); und nach dem Empfang einer Trägerantwortnachricht Senden der Trägerantwortnachricht, die die lokalen Informationen umfasst,
wobei die lokalen Informationen eine lokale Adressinformation sind,
**dadurch gekennzeichnet, dass**
die Backhaul-Netz-ID eine eNodeB-ID und/oder ein Tracking Area Identifier (TAI) ist und die Backhaul-Netzinformationen die Backhaul-Netz-ID sind.

## Revendications

1. Procédé de traitement de service, comprenant :
la réception (101) d'un message de Requête de Support depuis une entité de gestion de mobilité MME (2), le message de Requête de Support comprenant un identifiant, ID, de réseau d'amenée ;
l'obtention (102) d'informations de réseau d'amenée et d'informations locales correspondantes en fonction de l'ID de réseau d'amenée, et l'envoi du message de Requête de Support à une passerelle de réseau de données par paquets, P-GW, (4) ; et
après la réception d'un message de Réponse de Support, l'envoi (103) du message de Réponse de Support comprenant les informations locales,
dans lequel les informations locales sont des informations d'adresse locale,
**caractérisé en ce que**
l'ID de réseau d'amenée est au moins l'un d'un ID de NoeudB évolué, eNodeB, et d'un identifiant de zone de suivi, TAI, et les informations de réseau d'amenée constituent l'ID de réseau d'amenée.

2. Procédé selon la revendication 1, comprenant en outre après l'envoi du message de Réponse de Support :
la réception, par la MME (2), du message de Réponse de Support, et l'envoi du message de Réponse de Support comprenant les informations locales à un NoeudB évolué, eNodeB, (1).

3. Procédé selon la revendication 2, dans lequel l'étape de réception du message de Requête de Support depuis la MME (2) comprend :
la réception d'un message de Requête de Création de Support par Défaut depuis la MME (2), le message de Requête de Création de Support par Défaut étant envoyé par la MME (2) après que la MME (2) a reçu un message de Requête d'Attachement ; et
le message de Réponse de Support que la MME (2) envoie à l'eNodeB est un message d'Acceptation d'Attachement.

4. Procédé selon la revendication 2, dans lequel l'étape de réception du message de Requête de Support depuis la MME (2) comprend :
la réception d'un message de Requête de Création de Support depuis la MME (2), le message de Requête de Création de Support étant envoyé par la MME (2) après que la MME (2) a reçu un message de Requête d'actualisation de zone de suivi, TAU ; et
le message de Réponse de Support que la MME (2) envoie à l'eNodeB (1) est un message d'Acceptation de TAU.

5. Procédé selon l'une quelconque des revendications 1 à 4, dans lequel l'ID de réseau d'amenée comprend aussi un ID de réseau virtuel privé, VPN.

6. Procédé selon la revendication 5, dans lequel l'étape d'obtention des informations de réseau d'amenée et informations locales correspondantes en fonction de l'ID de réseau d'amenée comprend :
l'obtention d'au moins l'un des ID suivants : l'ID d'eNodeB, le TAI, et l'ID de VPN ; et
l'interrogation d'une table d'informations de réseau, laquelle mémorise un mappage entre les informations de réseau d'amenée, les informations locales et au moins l'un des ID suivants : l'ID d'eNodeB, le TAI, et l'ID de VPN, pour les informations de réseau d'amenée et informations locales correspondantes.

7. Dispositif de traitement de service, comprenant :
un premier module de réception (11), configuré pour recevoir (101) un message de Requête de Support depuis une entité de gestion de mobilité (MME) (2), le message de Requête de Support comprenant un identifiant (ID) de réseau d'amenée ;
un premier module d'obtention (12), configuré pour obtenir (102) les informations de réseau d'amenée et informations locales correspondantes en fonction de l'ID de réseau d'amenée, et envoyer le message de Requête de Support à une passerelle de réseau de données par paquets (P-GW) ; et
un module de traitement d'informations (13), configuré pour envoyer (103) le message de Réponse de Support comprenant les informations locales après la réception d'un message de Réponse de Support,
les informations locales étant des informations d'adresse locale,
**caractérisé en ce que**
l'ID de réseau d'amenée est au moins l'un d'un ID de NoeudB évolué, eNodeB, et d'un identifiant de zone de suivi, TAI, et les informations de réseau d'amenée constituent l'ID de réseau d'amenée.

8. Dispositif selon la revendication 7, dans lequel l'ID de réseau d'amenée comprend aussi un ID de réseau privé virtuel (VPN).

9. Dispositif selon la revendication 8, dans lequel le premier module d'obtention comprend :
une première unité d'obtention (121), configurée pour obtenir à partir du message de Requête de Support au moins l'un des ID suivants : l'ID d'eNodeB, le TAI, et l'ID de VPN ;
une table d'informations de réseau (122), configurée pour mémoriser un mappage entre les informations de réseau d'amenée, les informations locales et au moins l'un des ID suivants : l'ID d'eNodeB, le TAI, et l'ID de VPN ; et
une unité d'interrogation (123), configurée pour interroger la table d'informations de réseau (122) à la recherche des informations de réseau d'amenée et informations locales correspondantes en fonction de l'ID d'eNodeB, du TAI, et de l'ID de VPN obtenus par l'unité d'obtention (121).

10. Système de traitement de service, comprenant un NoeudB évolué, eNodeB, (1) sur un réseau de communications, une entité de gestion de mobilité, MME (2), une passerelle de desserte, S-GW (3), et une passerelle de réseau de données par paquets, P-GW, (4) ; dans lequel
la MME (2) est configurée pour envoyer un message de Requête de Support, qui comprend un identifiant, ID, de réseau d'amenée, à la S-GW (3) après la réception d'un message de Requête d'Attachement ou un message d'Actualisation de zone de suivi, TAU, depuis l'eNodeB (1) ; et
la S-GW (3) est configurée pour : recevoir le message de Requête de Support depuis la MME (2) ; obtenir des informations de réseau d'amenée et des informations locales correspondantes en fonction de l'ID de réseau d'amenée, et envoyer le message de Requête de Support à la P-GW (4) ; et après la réception d'un message de Réponse de Support, envoyer le message de Réponse de Support comprenant les informations locales,
les informations locales étant des informations d'adresse locale,
**caractérisé en ce que**
l'ID de réseau d'amenée est au moins l'un d'un ID d'eNodeB et d'un identifiant de zone de suivi (TAI) et les informations de réseau d'amenée constituent l'ID de réseau d'amenée.
